# EUROPEAN PATENT APPLICATION

(11) **EP 2 763 421 A1**
(43) Date of publication of application: **06.08.2014**
(21) Application number: 14153572.4
(22) Date of filing: 01.02.2014
(51) Int. Cl.: H04N 21/25, H04N 21/258, H04N 21/482, G06F 17/30, H04N 21/262, H04N 21/466

(54) **A personalized movie recommendation method and system**

(30) Priority: 01.02.2013 TR 201301294
(71) Applicant: KREA ICERIK HIZMETLERI VE PRODUKSIYON ANONIM SIRKETI, Istanbul (TR)
(72) Inventor: Uluyagmur, Mahiye, ISTANBUL (TR); Cataltepe, Zehra, ISTANBUL (TR); Tayfur, Esengul, ISTANBUL (TR)
(74) Representative: Iskender, Ibrahim

(57) **Abstract**

The present invention relates to a personalized movie recommendation method and system enabling the user to spend the screen time by viewing movies of interest and thereby, the user satisfaction to be increased. Recommendations are provided by means of the method comprising the following: generating estimated score values by utilizing the movie viewing information of the user and content information of the movies such as actors, directors, keywords, genres, date of production, broadcast channel, broadcast time interval; evaluating said estimated score values based on the performance measure; and providing the estimated score value with the maximum performance specific to the user.

## Description

### Technical Field

The present invention relates to a personalized movie recommendation method and system enabling the user to spend the screen time by viewing movies of interest and thereby, the user satisfaction to be increased.

### Prior Art

Nowadays, a large increase in the number of cinema/television and music content, genre and users capable of following them is seen. Therefore, recommendation systems to be used for recommending any content to the user base interested most in said content have gained importance. Since in general each user will have a different taste, providing right content recommendations becomes a critical problem.

Providing recommendations in systems capable of offering a lot of different contents to the users can be much more complex. Although in general a method providing content recommendations similar to the content being viewed is followed, whether or not providing a recommendation based on the dissimilar ones should be examined. The contents that have been viewed by the users in the past provide information about the contents to be viewed in the future. Not only the contents similar to the ones that have been viewed in the past, but also the other contents having the potential to be liked should also be recommended. Content appreciation of the users is determined by the points directly received from said users or calculated based on the viewing behavior thereof.

User profiles are very important for recommendation systems, because recommendation systems make recommendations based on said user profiles. User profiles contain information about users and user behavior analysis results. As a result of this analysis, user behavior is understood and thus, the system is arranged according to the user. In other words, user behaviors can be predicted by means of the user profiles and personal services can be offered. The most basic concept in obtaining the information is 'Data' and during the stage of creation of user profiles, 2 types of methods are used for data collection. These data collection methods are explicit feedback and implicit feedback methods.

In the explicit feedback method, data collection is carried out by scoring of content by the user, receiving demographic data from the user and preferences specified by the user. Preference data comprise inputting the fields interested by the user for recommendation of correct items by the system. Generally, in recommendation systems, explicit feedback user-content matrices comprising the content scores of the users are used.

In the implicit feedback method, behaviors of the user are monitored, analyzed and data collection is performed. The object is again to determine the interest of the user to the contents. The concept of interest varies depending on the contents. In general, information regarding the opinion of a user about the content can be obtained by using the data such as the long time spent by the user while reviewing a content, content acquisition history thereof, the content being searched thereby and viewing duration of the content.

In the explicit feedback systems, it is more difficult to obtain data since the user is expected to input information. In the implicit feedback systems, no input from the user is expected and such a problem is not encountered since the user behavior is monitored and data is obtained using certain algorithms. In the explicit feedback systems, lack of data problem can be encountered in the cases where the user does not input each information. On the other hand, in the implicit feedback systems, clearer predictions can be performed since all the movements of the user are analyzed.

The recommendation systems are special information filtering techniques that can be used for numerous products such as movies, music, books, news, images, and web pages having the potential of attracting attention of users. They are intended for providing right product recommendations to the users by taking the behavior thereof into account. The recommendation systems use various algorithms while collecting data. These are content-based filtering, collaborative filtering and hybrid filtering.

In the content-based recommendation systems, each product and user is addressed individually and a profile is generated for each. In the content filtering methods, collection of quality and adequate information on the product is required. The user profile comprises demographic data collected about the user and answers of the user to certain polls. For a movie, the content profile can comprise fields such as genre, actors, and keywords. In the movie recommendation systems, the content information of the movie to be recommended is compared to the content information of the movies already being viewed by the user. Similar ones are determined and recommendation to the user according to this content similarity is carried out. Consequently, the content-based filtering method is used for comparing the content information of the movies to be recommended to the content information contained in the user profile and for determining whether adequate compliance exists for movie recommendation.

The collaborative recommendation systems first find similar users liking the products of a user. The other products liked by similar users are recommended to the user starting from the one that is liked by most users. The advantage of said method is the utilization thereof in the recommendation of any product since it is independent of the content information. Consequently, collaborative filtering method is used for measuring the similarities between users and for providing recommendations based on said similarities. In the movie recommendation systems, viewing information of a user as well as information of other users having viewing preference similar thereto is utilized.

Hybrid recommendation systems are formed by a combination of more than one recommendation method. In general, the hybrid method emerges when content-based system using content information is used in the cases where the collaborative recommendation method is insufficient or when collaborative filtering is used in the case where the content-based system is insufficient. In the collaborative filtering implemented in the movie recommendation systems, since the users viewing and liking a movie newly introduced into the system are not known, recommending said movie to which user is also not known. In this case, referral is made to the content information of the movie. Thus, the similarity of said movie to the other movies in the system is found and accordingly, it can be recommended to the users. In the content-based systems, recommendation is only made according to the taste of the user to be provided with recommendation whereas in the hybrid recommendation systems, recommendation can be made by means of using tastes of other users similar to said user by using collaborative filtering method in addition to content filtering.

One of the problems affecting the recommendation systems is the over personalization. The system recommends the users only products similar to those that are already consumed thereby. In this case, no other products with the potential to be liked are recommended to the individual. Yet, it is expected that the recommendation systems provide product recommendations according to the past consumption behavior of the user as well as other products having the potential to be liked.

In the recommendation systems, the products being consumed by the users in the past give information about the ones to be consumed in the future. Evaluation information of the products being consumed by the users in the past is utilized. If explicit evaluation information such as the one comprising liking/not liking score values between 0-5 is available, a recommendation system can be created using this information. If explicit score information is not available, these values must be derived implicitly. The results of the recommendations provided by using explicit or implicit score values can differ. In the TV movie recommendation systems, although the user indicates the liking of a movie by providing explicit scoring thereto, said score can also be provided on a random basis. The implicit scores obtained by utilizing the viewing behavior of the user also suffer from some drawbacks. Although viewing duration of the user of a movie might seem significantly long, said user might be viewing said movie due to someone else or the television might have remained turned on and many movies that do not meet the user's tastes might have been viewed and therefore provided with high scores.

Another problem encountered in the TV movie recommendation systems is that the television is viewed by different members of the household and therefore the information is obtained from the general viewing information of the family members instead of the taste of a single individual. In this case, the problem of making recommendations so as to satisfy all of the household members emerges.

In the studies conducted by **Cataltepe and Altinel (2007, 2009),** the music listened by the users in the past as well as attributes of the music tracks are used together for the music recommendations. Further, popularity of tracks is also taken into consideration. When the tracks are clustered according to different attributes, different attributes could be used for representing the music taste of each user by looking at the quantity of the user who liked music tracks remaining in the same cluster using an entropy measure [1], [2].

In a study conducted by **Santos da Silva et al. (2012)** supporting the context-aware recommendation systems for personal digital televisions, a set of attributes comprising type of television programs, user's personal profile and content information of the user is used. This personal information is obtained by asking the users various questions. The fact that the resulting attributes obtained from users by means of various questions makes this system less reliable than the methods that do not comprise demographic information [3].

In another study conducted by **Ikawa K., et al. (2010),** the weight of an attribute in a set of attributes is calculated by dividing the number of movies comprising the attribute and viewed by the family to the total number of movies comprising the attribute. The result obtained here is the following: the viewing information alone can be insufficient for the inability thereof to determine the rating since some movies are liked and thoroughly viewed and some of them are started to be viewed and left without being liked. In the movies, the number of attributes provided in the attribute sets varies. In a movie, there is a small number of attributes such as actors, directors, etc. whereas attributes such as keywords can be present in a large number. This situation, in turn, results in a very high scoring for the attribute set having a large number of elements. Thus, in the study of Ikawa K., et al. (2010), summing only the calculated scores when calculating user specific score values can lead to misleading results [4].

In the United States Patent document numbered US2002199186**,** collaborative filtering based on similarity between pairs of items is disclosed. The user is asked to evaluate the contents being liked/disliked through the remote control and these evaluations are interpreted in two different ways, either explicitly or implicitly.

In the United States Patent document numbered US2011153663**,** recommendations made by using matrix decomposition methods are disclosed. In the matrix decomposition methods, users and products are represented in a less dimensional space, but by preserving the similarities in the user-product matrix. The matrix decomposition methods also take, along with the user/product scoring differences (bias), calculation of implicit user feedback, product popularity, scoring differences based on time and assigning various confidence factors to the inputs into account.

In the European Patent document numbered EP2357804**,** the users are clustered according to the channels, time intervals and similarities of viewing the same contents, the closest users are found by these clusters and recommendation generation is carried out according to the tastes thereof. Movie content information (actors, director, keywords, etc.) is not used.

In conclusion, the need for a personalized movie recommendation method eliminating the disadvantages mentioned above, enabling the user to spend the screen time by viewing the movies of interest and insufficiency of the solutions of the current state of the art have made the development in the related technical field necessary.

### Brief Description of the Invention

The present invention is developed by being inspired from the existing situations and seeks to solve the above mentioned drawbacks.

The object of the present invention is to enable the user to spend the screen time by viewing the movies of interest by means of the recommendation method to be formed, thus, to increase user satisfaction.

The object of the present invention is to create a high success recommendation system by using attributes positively affecting the success thanks to the attribute selection methods evaluating all the dimensions of the movie content attributes in the recommendation system.

Another object of the present invention is to provide a content-based recommendation system comprising a score calculation method using different attribute sets such as actors, directors, genres, keywords, production date, broadcasting channels, broadcasting time intervals and using implicit scores.

Another object of the present invention is to investigate the effects of different attribute sets on the recommendation system by comparing the behavior thereof.

Another object of the present invention is to make the best recommendations by evaluating the performance measures of the developed recommendation methods and selecting and using user specific recommendation methods.

The structural and the characteristic features and all the advantages of the present invention will be understood more clearly with the following figures and the detailed description written by referring to said figures and therefore, the evaluation needs to be done by taking said figures and detailed description into consideration.

### Description of the Figures

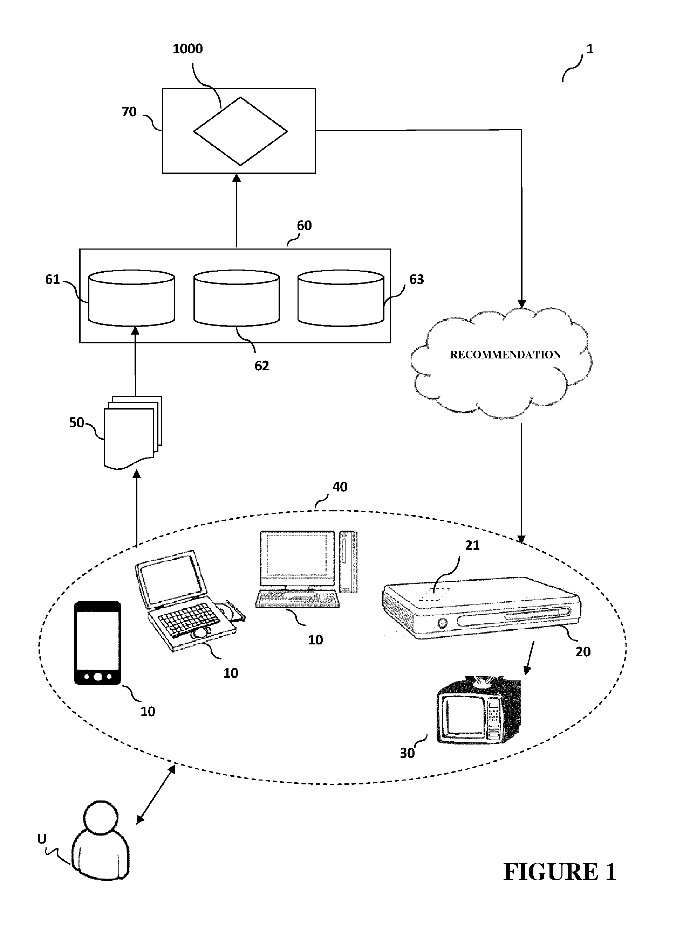

**Figure 1** is a schematic block diagram of the personalized movie recommendation system according to the present invention.

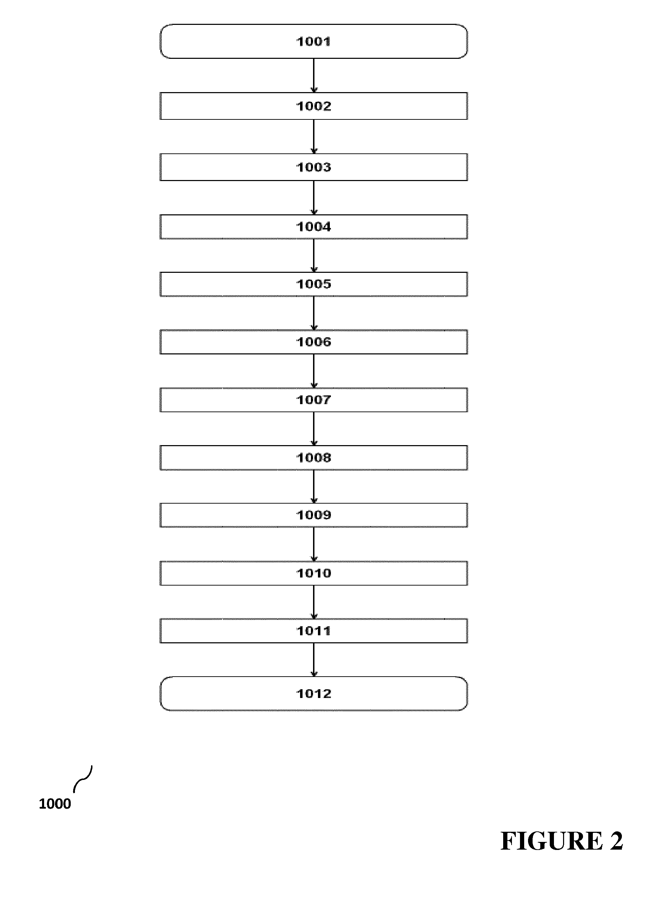

**Figure 2** is a flowchart of the personalized movie recommendation method.
**Figure 3** is a sample movie content information table displaying the attribute sets-attributes.
**Figure 4** is a diagram of the content-based movie recommendation method.
**Figure 5** is a sample movie-attribute matrix for a user u.

The parts in the figures are numbered, wherein corresponding numbers are provided below.

### Description of the References

1. Personalized movie recommendation system
10. Communication device
20. Set top box
21. Memory card
30. Television
40. Transmission medium
50. User viewing information
60. Database
61. User information database
62. Content information database
63. Broadcast information database
70. Engine unit
1000. Personalized movie recommendation method
1001. Receiving the user viewing information from the transmission medium
1002. Recording the user viewing information to the user information database
1003. Receiving the required information from the content information database
1004. Receiving the required information from the user information database
1005. Receiving the required information from the broadcast information database
1006. Determining the weight values for each attribute by the engine unit using the score values obtained according to the viewing information of the user and using the content information
1007. Determining individually the user specific special estimated score values by the engine unit
1008. Sorting individually the estimated score values found by the engine unit in the descending order
1009. Recommending the first m number of movies to the user according to the estimated score values sorted individually in the descending order by the engine unit
1010. Evaluating individually the estimated score values by the engine unit using a performance measure
1011. Generating recommendations to the user by using the method providing an estimated score value with the maximum performance by the engine unit
1012. Displaying the generated recommendations to the user by means of the transmission medium
U = User
VOD = Video on Demand

### Detailed Description of the Invention

The personalized movie recommendation system (1) enabling the user to spend the screen time by viewing movies of interest comprises the following:
- at least one communication device (10) enabling the users to access the contents over the Internet and also providing the user viewing information (50) for the purpose of monitoring the broadcasts being followed;
- at least one set top box (20) enabling the user viewing information to be recorded by means of an internal/external memory card (21) even in the case of not being connected to the Internet (50) and also enabling the contents broadcast via Internet/satellite to be converted into image;
- at least one television (30) enabling viewing of the contents converted by the set top box (20) to the users;
- at least one transmission medium (40) transferring the user viewing information (50) obtained from the communication devices (10), set top box (20) and television (30) to the database (60) and also enabling the recommendations generated by the engine unit (70) to be delivered to the user;
- at least one user viewing information (50) enabling the user viewing history to be monitored by recording the movies broadcast via Internet/satellite;
- at least one database (60) recording and storing the information required by the engine unit (70);
- at least one user information database (61) storing the user viewing information (50);
- at least one content information database (62) storing the content attribute information;
- at least one broadcast information database (63) storing the broadcast information of TV broadcasting or systems such as VOD; and
- at least one engine unit (70) generating different estimated score values by obtaining the required information from the database (60) for the purpose of generating recommendations to the user based on said information and enabling the users to be provided with special recommendations by means of using the method providing an estimated score value having the maximum performance among different score values.

In the preferred embodiment of the present invention, the communication devices (10) such as smart phones, tablets, mobile computers, notebook computers, desktop computers, etc., set top box (20) and television (30) being used by the users for viewing movies and providing user viewing information (50) are capable of connecting to the Internet. In said application, the transmission medium (40) is an Internet network being connected by the communication devices (10), set top box (20) and television (30). The user viewing information (50) received for the movies broadcast via Internet/satellite is stored in the user information database (61) for monitoring the viewing history of the users and making recommendations in accordance with said viewing history.

In the system (1) according to the present invention, the whole information to be used for generating a recommendation is provided in a database (60). In said system (1), the information can be individually recorded in different databases (61, 62, 63) as well as information can be obtained from a single database (60). The user viewing information (50) received from the transmission medium (40) is recorded in the user information database (61). The attribute information required for movie recommendations to be made to the users is received from the content information database (62). The information required for VOD systems and TV broadcasting is stored in the broadcast information database (63).

The movie recommendation system and method according to the present invention can also make recommendations to the users for VOD systems and TV broadcasting. In the broadcast information database (63), the broadcasting time and channel information are not provided for the VOD systems, whereas, broadcast and channel information of the movies broadcast in the past and to be newly broadcast are provided for the TV broadcasting.

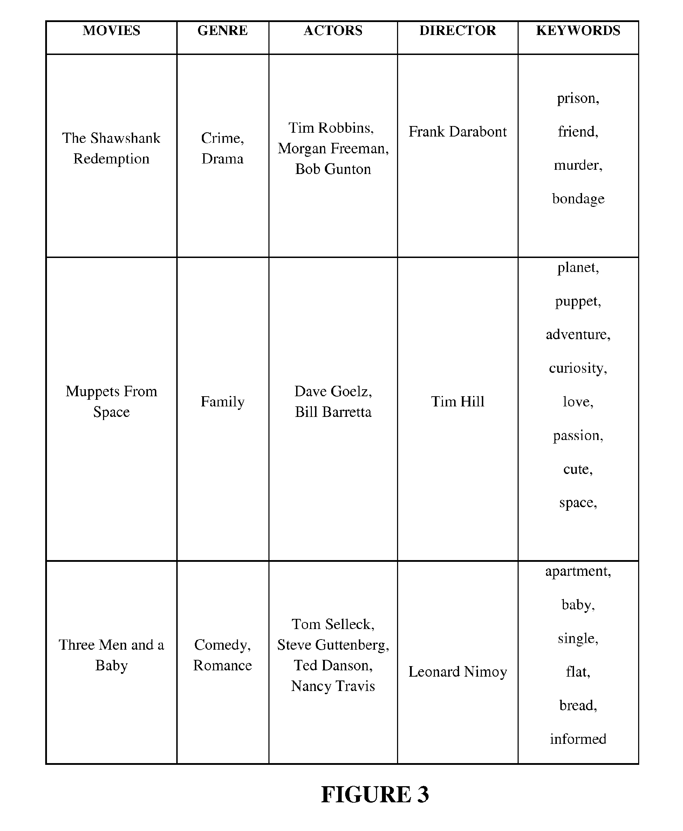

The information such as genres, actors, directors, production year, broadcast channel, broadcast time interval of the movies is used as attributes for the movies. Further, descriptive keywords are removed from the summary data of the movies. Natural language decoder programs are utilized when keywords are determined. Natural language decoder programs help in finding the roots of words with affixes. Some attribute information of the movies is shown in the table so as to provide an example. (Figure 3)

When determining the attributes making up the set of keyword attributes, weight of the words is calculated by the tf-idf method for determining the extent of the importance of the root form of words provided in the summary data for the movies. Tf-idf is a statistical measure of the value of a term in a document [5]. ${idf}_{t} = {log}_{10} ⁢ \frac{N}{{df}_{t}}$ idf value indicates that the terms used often do not contain information and it acts as a filter by eliminating these terms. *N* shows the total number of documents, *dfₜ* shows the number of documents containing the term *t* and *idfₜ* shows how much information is contained in the term *t*. ${\left(tf-idf\right)}_{t , d} = {tf}_{t , d} * {idf}_{t}$
*tf_{t,d}* (term frequency) is the frequency of the term *t* in the document *d.* The weight of each term for each document is determined by combining the terms *tf_{t,d}* and *idfₜ*. The tf-idf term is selected as the keyword for the movies at a certain threshold value.

The user viewing information (50) cannot be instantly transferred to the user information database (61). For example, in the case where the set top boxes (20) capable of connecting to the Internet are not connected thereto, thanks to the memory card (21) disposed inside the set top boxes (20), the viewing information of the users (50) is recorded in the memory card (21) disposed inside the set top boxes and when the set top boxes (20) are connected to the Internet, the entire viewing information of the users (50) is transferred to the user information database (61) immediately or at certain intervals (daily, weekly, monthly, etc.).

In the method (1000) according to the present invention, 3 different time intervals, *t*₁, *t*₂ and , *t*₃ are determined and the data received from said time intervals are used. In the time interval *t*₁, attribute weights of the movies viewed by users are calculated by taking the viewing duration of the movies into account. The time interval *t*₂ is the time interval used for receiving the information of the movies being viewed by the user in order to determine the suitable recommendation system. The time interval *t*₃ comprises the sub time intervals such as hour, day, week, etc. contained in the time interval *t*₂. In the time interval *t*₃, success performance of the recommendations is measured for the movies viewed by the user, then it is averaged and recommendations are provided to the user by using the method providing the estimated score value with the maximum performance.

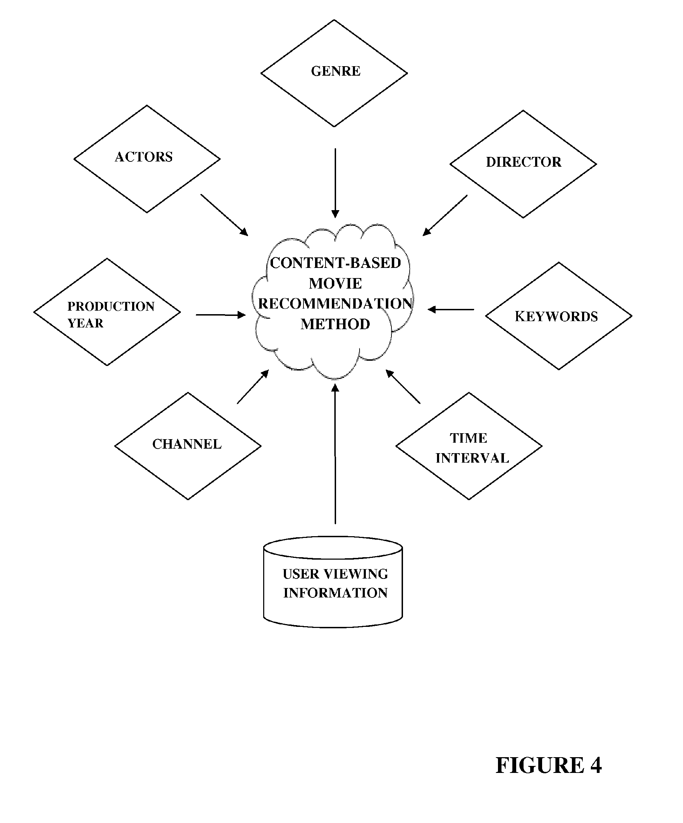

In the developed recommendation system (1), attributes of the movies as well as score values given by the users to the movies are used. In the system (1), if the users do not explicitly score the movies, said scores should be implicitly obtained. In this respect, the score value is calculated by utilizing the user movie viewing durations. (Figure 4)

When the user *u* viewing duration of a movie *i* during *t*₁ is *t*(*u*,*i*), and the total duration of the movie is *tᵢ*, the score value R obtained according to the viewing duration of the movie *i* by the user *u* is determined by dividing the viewing durations of the movie *i* by the user *u* during *t*₁ to the total duration of the movie *i*[6?]. $R = r \left(u⁢i\right) = \frac{t \left(u⁢i\right)}{{t}_{i}} ∈ \left[0⁢1\right]$

During the *t*₁, the viewing duration *t*(*u*, *i*) of the movie *i* by the user *u* can be shown in two different ways. Viewing durations of a movie by the user can be included once as well as in the case where said user views the same part more than once, the viewing duration is obtained by adding up the overlapping viewing durations. If a user has never viewed the movie, then, the score value (*R*) for said movie is assumed to be nonexistent.

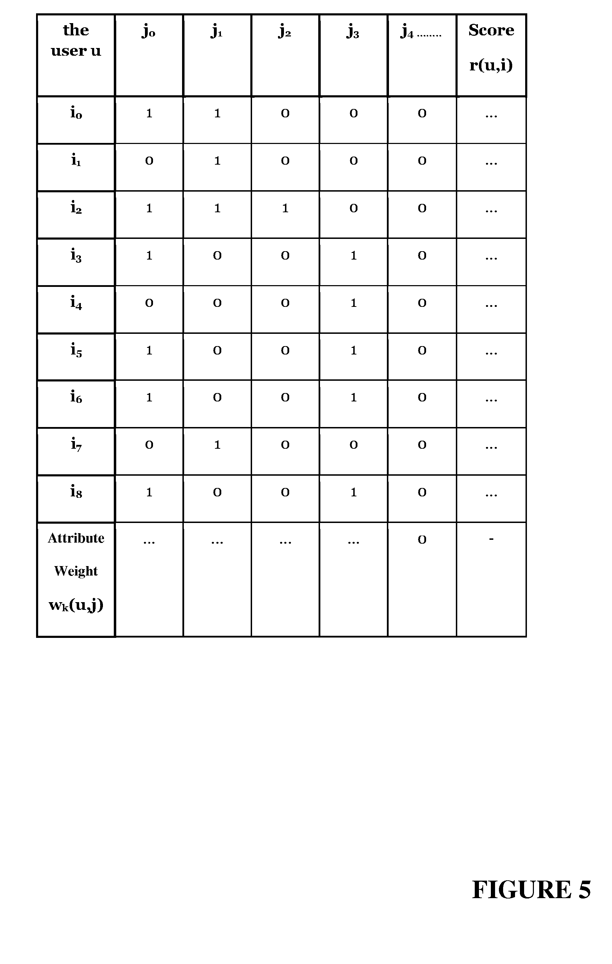

In the sample movie-attribute matrix created in Figure 5, attributes of all the movies shown in the form of *j₀, j₁,...* are listed. In the cases where the movies *i₀,...,i₈* viewed by the user *u* contain these attributes and do not contain said attributes, the value of the movies in the matrix is determined to be *1* and *0,* respectively. The last column of the matrix comprises the score values (*R*) given by user *u* to the movies being viewed. As in the *j₄* attribute column, some users may have never viewed the movies comprising certain attributes.

In the system (1), each user is provided with a recommendation based on the past tastes thereof. Since each user is provided with a recommendation based on the tastes thereof, attribute weight values are determined for each attribute by the engine unit (70) using score values (*R*) obtained according to the viewing information of the user and content information (1006).

In the step of determining the weight values for each attribute by the engine unit (70) using the score values (*R*) obtained according to the viewing information of the user and using the content information (1006); the weight value obtained by using the viewing information of the user *u* during the time *t*₁ for each of the attribute *j* provided in the attribute set *k* is determined by dividing the sum of the values obtained by multiplying the score value given to the movie *i* by the user *u* for all of the movies viewed by the user *u* during the time *t*₁ with the factors *1* and 0 for the cases where attribute *j* is present and not present in the movie *i*, respectively, to the total number of movies viewed by the user *u* during the time *t*₁. ${w}_{k} \left(u⁢j\right) = \frac{1}{{I}_{u}^{{t}_{1}}} {\sum }_{i ∈ {I}_{u}^{{t}_{1}}} {x}_{k , u} \left(i⁢j\right) ⁢ r \left(u⁢i\right)$

The value *k* ∈ is, in order to display the attribute sets *k* {actors, genres, directors, keywords, date of production, broadcast channels, broadcast time interval} and the *wₖ* (*u, j*) refers to the weight of the attribute *j* provided in the attribute set *k* for the user *u. r*(*u,i*) ∈ 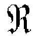 is the score given by the user *u* to the movie *i. xₖ,ᵤ* (*i*, *j*) ∈ {0,1} is a function having the values of 1 and 0 in the cases where attribute *j* is present and not present in the movie *i*, respectively. ${I}_{u}^{{t}_{1}}$ indicates the movies viewed by the user *u* during the time *t*₁. For the user *u,* weight values *wₖ* (*u, j*) calculated for all attributes *j* can be shown in a matrix created as in Figure 5. For example, the weight of attribute *j₀* is determined by adding up the scores given by the user to the movies *i₀, i₂, i₃, i₅, i₆ i₈* comprising said attribute therein, then, dividing said sum to the total number of movies viewed by the user during time *t*₁ and normalizing said division.

The attribute weights found for each user is used for determining the estimated score values ((*R*₁),(*R*₂),(*R*₃),(*R*₄)) of the movies to be recommended. The process (1007) of determining individually the user specific special estimated score values ((*R*₁),(*R*₂),(*R*₃),(*R*₄)) by the engine unit (70) preferably comprises the following sub-steps:
- obtaining the first estimated score values (*R*₁) by summing the weight values of all of the attributes *j* provided in the attribute set *k* provided in the movie *i* based on all the attribute sets *k* for the movie *i* of the user *u;*
- obtaining the second estimated score values (*R*₂) by dividing the first estimated score value obtained for the attribute set *k* based on all the attribute sets *k* for the movie *i* of the user *u* to the weight values of the attributes *j* of the attribute set *k* provided in the movie *i*;
- obtaining the normalized first estimated score values $\left({R}_{1}^{N}\right)$ by normalization of the first estimated score values obtained based on all the attribute sets k for the movie *i* of the user *u;*
- obtaining the third estimated score value (*R*₃) by summing the normalized first estimated score values obtained based on all the attribute sets *k* for the movie *i* of the user *u;*
- obtaining the normalized second estimated score values $\left({R}_{2}^{N}\right)$ by normalization of the second estimated score values based on all the attribute sets *k* for the movie *i* of the user *u;* and
- obtaining the fourth estimated score value (*R*₄) by summing the normalized second estimated score values obtained based on all the attribute sets *k* for the movie *i* of the user *u*.

When the first estimated score value (*R*₁) is obtained, the weight values of the attributes *j* of the attribute set *k* provided in the movie *i* for the attribute set *k* in the movie *i* of the user *u* are summed. ${R}_{1} = {r}_{k} \left(u⁢i\right) = {\sum }_{j ∈ {D}_{k , i}} {w}_{k} \left(u⁢j\right)$
*D_{k,i}* is the set of attributes provided in the attribute set *k* of the movie *i*. In the attribute sets of some movies, more than one attribute set can be present. Actor attribute set is an example for this case. Since a movie often has more than one actor, the score can be obtained by summing the weight value determined for each actor as well as the sum of weight values can be normalized by dividing said score sum to the number of actors in the movie.

When the second estimated score value (*R*₂) is obtained, the weight values given by the user *u* to the attributes *j* provided in the attribute set *k* provided in the movie *i* are summed and the weight values are divided to the number of attributes being summed. ${R}_{2} = {{r}^{ʹ}}_{k} \left(u⁢i\right) = \frac{1}{\left|{D}_{k , i}\right|} {\sum }_{j ∈ {D}_{k , i}} {w}_{k} \left(u⁢j\right)$
|D*_{k,i}*| is the number of attributes of the attribute set k provided in the movie *i*. Since different number of attributes is provided in each attribute set, each of the first estimated score values (*R*₁) calculated based on the attribute sets will be in a different range. However, estimated scores should be in the same range in order to combine the estimated scores from different attribute sets and to see the effect of each of the attribute sets. Estimated scores are normalized by Min-Max normalization method in order to meet this requirement.

When by normalization of the first estimated score value (*R*₁) obtained based on the attribute set *k* for the movie *i* of the user *u,* normalized first estimated score value $\left({R}_{1}^{N}\right)$ is obtained, from the first estimated score value (*R*₁) obtained based on the attribute set *k* for the movie *i* of the user *u,* the minimum of the first estimated score values given by the user *u* based on the attribute set *k* for the movies to be recommended is subtracted. The obtained result is divided to the result obtained when the minimum first estimated score value is subtracted from the maximum first estimated score value given by the user *u* based on the attribute set *k* to the movies to be recommended. ${R}_{1}^{N} = {r}_{k}^{N} \left(u⁢i\right) = \left({r}_{k}\left(u⁢i\right)-m⁢{R}_{u , k}\right) / \left(M⁢{R}_{u , k}-m⁢{R}_{u , k}\right)$
*rₖ* (*u, i*) is the first estimated score value (*R*₁) of the user *u* obtained based on the attribute set *k* for the movie *i. mR_{u,k}* shows the minimum first estimated score value given by the user *u* based on the attribute set *k* to the movies to be recommended and *MR_{u,k}* shows the maximum first estimated score value. ${r}_{k}^{N} \left(u⁢i\right)$ is the normalized first estimated score value $\left({R}_{1}^{N}\right)$ of the user *u* obtained based on the attribute set *k* for the movie *i*.

When the third estimated score value (*R*₃) is obtained, the normalized first estimated score values $\left({R}_{1}^{N}\right)$ of the user *u* obtained based on the attribute sets *k* for the movie *i* are summed. ${R}_{3} = {r}_{sum}^{N} \left(u⁢i\right) = {\sum }_{k} {{r}_{k}}^{N} \left(u⁢i\right)$

When by normalization of the second estimated score value (*R*₂) obtained based on the attribute set *k* for the movie *i* of the user *u,* normalized second estimated score value $\left({R}_{2}^{N}\right)$ is obtained, from the second estimated score value (*R*₂) obtained based on the attribute set *k* for the movie *i* of the user *u,* the minimum of the second estimated score values given by the user *u* based on the attribute set *k* for the movies to be recommended is subtracted. The obtained result is divided to the result obtained when the minimum second estimated score value is subtracted from the maximum second estimated score value given by the user *u* based on the attribute set *k* to the movies to be recommended. ${R}_{2}^{N} = {r}_{k}^{{N}^{ʹ}} \left(u⁢i\right) = \left({{r}^{ʹ}}_{k}\left(u⁢i\right)-m⁢{{R}^{ʹ}}_{u , k}\right) / \left(m⁢{{R}^{ʹ}}_{u , k}-m⁢{{R}^{ʹ}}_{u , k}\right)$
*r^{'}ₖ*(*u, i*) is the second estimated score value (*R*₂) of the user *u* obtained based on the attribute set *k* for the movie *i. mR^{'}_{u,k}* shows the minimum second estimated score value given by the user *u* based on the attribute set *k* to the movies to be recommended and *MR^{'}_{u,k}* shows the maximum second estimated score value. ${r}_{k}^{{N}^{ʹ}} \left(u⁢i\right)$ is the normalized second estimated score value $\left({R}_{2}^{N}\right)$ of the user *u* obtained based on the attribute set *k* for the movie *i*.

When the fourth estimated score value (*R*₄) is obtained, the normalized second estimated score values $\left({R}_{2}^{N}\right)$ of the user *u* obtained based on the attribute sets *k* for the movie *i* are summed. ${R}_{4} = {{r}_{sum}^{N}}^{ʹ} \left(u⁢i\right) = {\sum }_{k} {{{r}_{k}}^{N}}^{ʹ} \left(u⁢i\right)$

In the system (1) according to the present invention, the estimated score values ((*R*₁),(*R*),(*R*₃),(*R*₄)) of the user *u* obtained by the engine unit (70) based on the different attribute sets for the movie *i* are individually sorted in the descending order (1008). First number of *m* movies are individually recommended to the user according to the sorted estimated score values ((*R*),(*R*),(*R*₃),(*R*₄)) (1009). In the first *m* recommendations being individually recommended according to each of the estimated score values ((*R*₁),(*R*₂),(*R*₃),(*R*₄)), how many of the recommended movies is viewed by the user and what score is given thereto is also another factor taken into account, thus, the performances of the estimated score values ((*R*₁),(*R*),(*R*₃),(*R*₄)) recommended to the user is individually evaluated by the engine unit (70) by using a performance measure (1010). When the performances of the estimated score values ((*R*₁),(*R*₂),(*R*₃),(*R*₄)) is evaluated, first estimated score value (*R*₁) and second estimated score value (*R*₂) are individually evaluated based on all of the attribute sets *k*.

In the case where estimated score values ((*R*₁),(*R*),(*R*₃),(*R*₄)) of more than one movie are the same, the priority is given to the movies that have never been viewed. In the case where more than one same estimated score exist and if there is one movie that has never been viewed, then, first said movie is recommended. If there is more than one movie that has never been viewed, then, a random recommendation is provided from said movies.

The performance measure used in the system (1) is the accurate overlapping (*θ*) method. In said performance measure, the first *m* movie recommendations being provided by means of the estimated score values for the user *u* during *t*₃ and the first *m* movies listed when the movies viewed by the user during *t*₃ are sorted according to the (*R*) values in the descending order are compared and number of overlapping movies (*θ*) is found. If the user during *t*₂ has viewed more than or equal to recommended *m* number of movies in each time interval *t*₃ provided with a recommendation, *θ*s calculated for the time intervals *t*₃ are averaged. If the user has viewed less than *m* movies during *t*₂ and there are time intervals *t*₃ corresponding thereto, then, *θ* is not calculated for the time intervals *t*₃ in which said user has viewed less than m movies. For example, when the user *u* during 1 month (*t*₂ =1 month) is provided each day (*t*₃ =1 day) with 3 recommendations (*m*=3), if said user has viewed more than 3 movies each day but viewed less than 3 movies for the other days of the month, then, only the *θ*s calculated for 27 days are averaged.

The process (1010) of individually evaluating the performances of the estimated score values ((*R*₁),(*R*),(*R*₃),(*R*₄)) recommended to the user by the engine unit (70) using a performance measure preferably comprises the following sub-steps:
- listing the first *m* movie recommendations provided to the user *u;*
- sorting the movies viewed by the user *u* in the descending order according to the (*R*) values and listing the first *m* movies;
- comparing the listed first *m* movies with the recommended first *m* movies;
- determining the matching number of movies (*θ*);
- if the user *u* during *t*₂ has viewed more than or equal to *m* number of movies in each time interval *t*₃ provided with a recommendation, averaging the *θ*s determined for the time intervals *t*₃ ; and
- if the user *u* during *t*₂ has viewed less than *m* number of movies in some time intervals *t*₃ provided with a recommendation, averaging only the *θ*s of the time intervals *t*₃ in which said user has viewed more than or equal to *m* number of movies.

The personalized movie recommendation method (1000) according to the present invention enabling the user to spend the screen time by viewing movies of interest comprises the following process steps:
- receiving (1001) the user viewing information (50) from the transmission medium (40);
- recording (1002) the user viewing information (50) in the user information database (61);
- receiving (1003) the required information from the content information database (62);
- receiving (1004) the required information from the user information database (61);
- receiving (1005) the required information from the broadcast information database (63);
- determining (1006) the weight values for each attribute by the engine unit (70) using the score values (*R*) obtained according to the viewing information (50) of the user and using the content information;
- determining (1007) individually the user specific special estimated score values ((*R*₁),(*R*₂),(*R*₃),(*R*₄)) by the engine unit (70);
- sorting (1008) individually the estimated score values ((*R*₁),(*R*₂),(*R*₃),(*R*₄)) found by the engine unit (70) in the descending order;
- recommending (1009) the first *m* number of movies to the user according to the estimated score values ((*R*₁),(*R*₂),(*R*₃),(*R*₄)) sorted individually in the descending order by the engine unit (70);
- evaluating (1010) individually the estimated score values ((*R*₁),(*R*₂),(*R*₃),(*R*₄)) by the engine unit (70) using a performance measure;
- generating (1011) recommendations to the user by using the method providing an estimated score value with the maximum performance by the engine unit (70); and
- displaying (1012) the generated recommendations to the user by means of the transmission medium (40).

Around these basic concepts, development of a wide variety of applications of the personalized movie recommendation method and system according to the present invention is possible, wherein the present invention cannot be limited to the examples described herein and it is mainly as disclosed in following the claims.

### REFERENCES

**1.** Cataltepe, Z. and Altmel B., 2007: "Hybrid Music Recommendation Based on Different Dimensions of Audio Content and Entropy Measure," Eusipco (European Signal Processing Conference) 2007, 3-7 September, Poland.
**2.** Cataltepe, Z. and Altmel B., 2009: "Music Recommendation by Modeling User's Preferred Perspectives of Content, Singer/Genre and Popularity, Collaborative and Social Information Retrieval and Access: Techniques for Improved User Modeling," Edited by M. Chevalier, C. Julien and C. Soulé-Dupuy tarafindan derlendi, IGI Global, pp. 203-221.
**3.** Santos da Silva, F., Alves, L. G. P., and Bressan, G., 2012: "PersonalTVware: An Infrastructure to Support the Context-Aware Recommendation for Personalized Digital TV," International Journal of Computer Theory and Engineering vol.4, No.2, April 2012.
**4.** Ikawa, K., Fukuhara, T., Fujii, H., Takeda, H., 2010: "Evaluation of a TV Programs Recommendation using the EPG and Viewer's Log Data," in C. Peng, P. Vuorimaa, P. Naranen, C. Quico, G. Harboe and A. Lugmayr eds., Adjunct Proceedings EuroITV 2010, pp. 182185, Tampre, Finland, Tampere University of Technology, 2010.
**5.** Jones, K. S., 2004: "A Statistical interpretation of term specificity and its application in retrieval," Journal of Documentation, vol. 60, no. 5, pp. 493-502, 2004.
**6.** Yu, Z. and Zhou, X., 2004: "TV3P: An Adaptive Assistant for Personalized TV," IEEE Trans. on Consumer Electronics, vol.50, no. 1, pp. 393-399, February 2004.

## Claims

1. A method (1000) for a personalized movie recommendation system (1) comprising the steps of obtaining a score value (*R*) based on the user viewing information by dividing the movie viewing durations of the users to the total duration of the movie, enabling the user to spend the screen time by viewing movies of interest, **characterized in** comprising the following process steps:
- receiving (1001) the user viewing information (50) from the transmission medium (40);
- recording (1002) the user viewing information (50) in the user information database (61);
- receiving (1003) the required information from the content information database (62);
- receiving (1004) the required information from the user information database (61);
- receiving (1005) the required information from the broadcast information database (63);
- determining (1006) the weight values for each attribute by the engine unit (70) using the score values (*R*) obtained according to the viewing information (50) of the user and using the content information;
- determining (1007) individually the user specific special estimated score values ((*R*₁),(*R*₂),(*R*₃),(*R*₄)) by the engine unit (70);
- sorting (1008) individually the estimated score values ((*R*₁),(*R*₂),(*R*₃),(*R*₄)) found by the engine unit (70) in the descending order;
- recommending (1009) the first m number of movies to the user according to the estimated score values ((*R*₁),(*R*₂),(*R*₃),(*R*₄)) sorted individually in the descending order by the engine unit (70);
- evaluating (1010) individually the estimated score values ((*R*₁),(*R*₂),(*R*₃),(*R*₄)) by the engine unit (70) using a performance measure;
- generating (1011) recommendations to the user by using the method providing an estimated score value with the maximum performance by the engine unit (70); and
- displaying (1012) the generated recommendations to the user by means of the transmission medium (40).

2. A method according to Claim 1, **characterized in that** in the step (1009) of recommending the first *m* number of movies to the user according to the estimated score values ((*R*₁),(*R*₂),(*R*₃),(*R*₄)) sorted individually in the descending order by the engine unit (70), the recommendation priority is given to the movies that has never been viewed when the estimated score values ((*R*₁),(*R*₂),(*R*₃),(*R*₄)) are identical.

3. A method according to Claim 1 or Claim 2, **characterized in that** in the step giving the recommendation priority to the movies that have never been viewed when the estimated score values ((*R*₁),(*R*₂),(*R*₃),(*R*₄)) are identical, if there is more than one movie comprised therein and that has never been viewed, then, a random recommendation is provided from said movies.

4. A method according to Claim 1, **characterized in that** the step (1006) of determining the weight values for each attribute by the engine unit (70) using the score values (*R*) obtained according to the viewing information of the user and using the content information comprises the following sub-steps:
- receiving the score values (*R*) obtained based on the viewing information (50) of the user *u* for all the movies viewed by the user *u* during *t*₁ ;
- multiplying the score value (*R*) of the movie *i* given by the user *u* for all the movies viewed by the user *u* during *t*₁ with the factor 1 for the case where attribute *j* is present in the movie *i* and with the factor 0 for the case where said attribute is not present in said movie; and
- summing the obtained values and dividing said sum to the total number of movies viewed by the user *u* during *t*₁.

5. A method according to claim 1, **characterized in that** the step of (1007) determining individually the user specific special estimated score values ((*R*₁),(*R*₂),(*R*₃),(*R*₄)) by the engine unit (70) comprises the following sub-steps:
- obtaining the first estimated score values (*R*₁) by summing the weight values of all of the attributes *j* provided in the attribute set *k* provided in the movie *i* based on all the attribute sets *k* for the movie *i* of the user *u;*
- obtaining the second estimated score values (*R*₂) by dividing the first estimated score value obtained for the attribute set *k* based on all the attribute sets *k* for the movie *i* of the user *u* to the weight values of the attributes *j* of the attribute set *k* provided in the movie *i*;
- obtaining the normalized first estimated score values $\left({R}_{1}^{N}\right)$ by normalization of the first estimated score values obtained based on all the attribute sets *k* for the movie *i* of the user *u;*
- obtaining the third estimated score value (*R*₃) by summing the normalized first estimated score values obtained based on all the attribute sets *k* for the movie *i* of the user *u;*
- obtaining the normalized second estimated score values (*R*₂) by normalization of the second estimated score values based on all the attribute sets *k* for the movie *i* of the user *u;* and
- obtaining the fourth estimated score value (*R*₄) by summing the normalized second estimated score values obtained based on all the attribute sets *k* for the movie *i* of the user *u*.

6. A method according to Claim 5, **characterized in that** the first estimated score value (*R*₁) obtained based on the attribute set *k* is added to the weight values of the attributes *j* of the attribute set *k* provided in the movie *i* given by the user *u* for the attribute set *k* in the movie *i* of the user *u*.

7. A method according to Claim 5, **characterized in that** the second estimated score value (*R*₂) obtained based on the attribute set *k* is added to the weight values of the attributes *j* of the attribute set *k* provided in the movie *i* given by the user *u* for the attribute set *k* in the movie *i* of the user *u* and the weight values are divided to the number of attributes.

8. A method according to Claim 5, **characterized in** obtaining the normalized first estimated score value $\left({R}_{1}^{N}\right)$ based on the attribute set *k* is **characterized by** the following: from the first estimated score value (*R*₁) obtained based on the attribute set *k* for the movie *i* of the user *u,* the minimum of the first estimated score values (*R*) given by the user *u* based on the attribute set *k* for the movies to be recommended is subtracted, the obtained result is divided to the result obtained when from the maximum first estimated score value (*R*₁) given by the user *u* based on the attribute set *k* to the movies to be recommended, the minimum first estimated score value (*R*₁) is subtracted.

9. A method according to Claim 5, **characterized in that** the third estimated score value (*R*₃) is obtained by summing the normalized first estimated score values $\left({R}_{1}^{N}\right)$ obtained based on all the attribute sets *k* for the movie *i* of the user *u* are summed.

10. A method according to Claim 5, **characterized in** obtaining the normalized second estimated score value $\left({R}_{2}^{N}\right)$ based on the attribute set *k* is **characterized by** the following: from the second estimated score value (*R*₂) obtained based on the attribute set *k* for the movie *i* of the user *u,* the minimum of the second estimated score values (*R*₂) given by the user *u* based on the attribute set *k* for the movies to be recommended is subtracted, the obtained result is divided to the result obtained when from the maximum second estimated score value (*R*₂) given by the user *u* based on the attribute set *k* to the movies to be recommended, the minimum second estimated score value (*R*₂) is subtracted.

11. A method according to Claim 5, **characterized in that** the fourth estimated score value (*R*₄) is obtained by summing the normalized second estimated score values $\left({R}_{2}^{N}\right)$ obtained based on all the attribute sets *k* for the movie *i* of the user *u* are summed.

12. A method according to any one of the preceding claims, **characterized in that** the step (1010) of evaluating individually the estimated score values ((*R*₁),(*R*₂),(*R*₃),(*R*₄)) by the engine unit (70) using a performance measure comprises the following sub-steps:
- listing the first *m* movie recommendations provided to the user *u;*
- sorting the movies viewed by the user *u* in the descending order according to the (*R*) values and listing the first *m* movies;
- comparing the listed first *m* movies with the recommended first *m* movies; and
- determining the matching number of movies (*θ*).

13. A method according to Claim 12, **characterized in that** the first estimated score value (*R*₁) and second estimated score value (*R*₂) are individually evaluated based on all of the attribute sets *k* by using a performance measure.

14. A method according to Claim 12, **characterized in that** if the user *u* during *t*₂ has viewed more than or equal to *m* number of movies in each time interval *t*₃ provided with a recommendation, the *θ*s determined for the time intervals *t*₃ are averaged.

15. A method according to Claim 12, **characterized in that** if the user *u* during *t*₂ has viewed less than *m* number of movies in some time intervals *t*₃ provided with a recommendation, only the *θ*s of the time intervals *t*₃ in which said user has viewed more than or equal to *m* number of movies are averaged.

16. A system (1) used in the personalized movie recommendation system enabling the user to spend the screen time by viewing movies of interest, **characterized in** comprising the following:
- at least one communication device (10) enabling the users to access the content over the Internet and also providing the user viewing information (50) for the purpose of monitoring the broadcasts being followed;
- at least one set top box (20) enabling the user viewing information to be recorded by means of an internal/external memory card (21) even in the case of not being connected to the Internet (50) and also enabling the content broadcast via Internet/satellite to be converted into image;
- at least one television (30) enabling viewing of the content converted by the set top box (20) to the users;
- at least one transmission medium (40) transferring the user viewing information (50) obtained from the communication devices (10), set top box (20) and television (30) to the database (60) and also enabling the recommendations generated by the engine unit (70) to be delivered to the user;
- at least one user viewing information (50) enabling the user viewing history to be monitored by recording the movies broadcast via Internet/satellite;
- at least one database (60) recording and storing the information required by the engine unit (70);
- at least one user information database (61) storing the user viewing information (50);
- at least one content information database (62) storing the content attribute information;
- at least one broadcast information database (63) storing the broadcast information of TV broadcasting or systems such as VOD; and
- at least one engine unit (70) generating different estimated score values by obtaining the required information from the database (60) for the purpose of generating recommendations to the user based on said information and enabling the users to be provided with special recommendations by means of using the method providing an estimated score value having the maximum performance among different score values.

17. A system (1) according to Claim 16, **characterized in** comprising communication devices (10), a set top box (20) and a television (30) capable of connection to the Internet.

18. A system (1) according to Claim 17, **characterized in** comprising a transmission medium (40) comprising an Internet network for the connection of the communication devices (10), set top box (20) and television (30) thereto.
